# NEUE EUROPÄISCHE PATENTSCHRIFT

(11) **EP 1 415 854 B2**
(45) Veröffentlichungstag und Bekanntmachung des Hinweises auf die Entscheidung über den Einspruch: **25.07.2012**
(45) Hinweis auf die Patenterteilung: 26.12.2007
(21) Anmeldenummer: 03024304.2
(22) Anmeldetag: 24.10.2003
(51) Int. Cl.: B60P 7/14

(54) **Vorrichtung zur Sicherung von Ladung**
Device for securing of loads
Dispositif d'immobilisation de charge

(30) Priorität: 30.10.2002 DE 10250463
(43) Veröffentlichungstag der Anmeldung: 06.05.2004
(73) Patentinhaber: Fahrzeugwerk Bernard Krone GmbH, 48480 Spelle (DE)
(72) Erfinder: Krone, Bernard, 48480 Spelle (DE); Evers, Heinz, 49733 Haren (DE)
(74) Vertreter: Busse & Busse

(56) Entgegenhaltungen:
- DE-A1- 19 533 784
- DE-A1- 19 538 077
- DE-U1- 9 405 528
- DE-U1- 20 101 838
- DE-U1- 20 210 354
- DE-U1- 20 306 124
- FR-A- 2 821 814
- US-A- 2 155 872
- US-A- 3 741 127
- US-A- 4 781 498
- US-A- 5 386 674

## Beschreibung

Die Erfindung bezieht sich auf eine Vorrichtung zur Sicherung von Ladung auf Transportfahrzeugen.

Derartige Vorrichtungen zur Ladegutsicherung in Längsrichtung einer Ladefläche eines Transportfahrzeuges sind aus dem Stand der Technik in verschiedensten Ausführungen von Trennwänden, Ladebalken und ähnlichen Sicherungselementen bekannt.

So beschreiben beispielsweise die DE 298 07 431 U1 und die DE 94 05 528 U1 Vorrichtungen zur Stabilisierung von Ladung, insbesondere von Stückgütern, in Längsrichtung der Ladefläche von Transportfahrzeugen, die in Form von Rahmen bzw. Balken, die quer zur Längsrichtung der Ladefläche zwischen zwei gegenüberliegenden Bordwänden mit entsprechenden Befestigungsmitteln kraft- bzw. formschlüssig befestigt werden. Nachteil dieser Ausführungen ist, dass diese Sicherungen nur in Verbindung mit beidseitigen Bordwänden eingesetzt werden können. Des weiteren ist eine Höheneinstellung, wenn überhaupt, nur bedingt im Bereich der Bordwandhöhen möglich. Bei nur kraftschlüssiger Verbindung zu den Bordwänden ist die Funktion der Ladungssicherung aufgrund der aufzunehmenden Kräfte nur bedingt gegeben. Eine formschlüssige Verbindung bedingt hingegen einen erheblichen Mehraufwand und damit Mehrkosten bei der Bordwandherstellung.

Aus der DE 32 31 327 C2 ist eine Ladegutschutzeinrichtung für in Fahrzeugen transportierte Lasten mit zwischen den einzelnen Stückgütern auf oberen und unteren Rastschienen festlegbaren Trennwänden bekannt. Nachteil einer derartigen Vorrichtung ist die Notwendigkeit eines stabilen und damit schweren kostenintensiven Fahrzeugaufbaus für obere Rastschienen, die damit verbundene verringerte Zuladung und die im ungenutztem Zustand verlorengehende Transportfläche.

Aus der US 3,741,127 A ist eine Trennwand-Anordnung (Schott) eines Frachttransportfahrzeuges bekannt geworden, welche dazu vorgesehen ist, verschieden große Abteile zur Aufnahme von Frachtstücken auszubilden. Die hier offenbarten Trennwände erstrekken sich vom Bodenbereich bis zum Deckenbereich. Im Bodenbereich dienen Lochschienen zur Arretierung der Trennwand, während im Deckenbereich ein Laufkatzensystem zur Positionierung bzw. Festlegung der Trennwand vorgesehen ist.

Ausgehend von diesem Stand der Technik liegt der Erfindung die Aufgabe zugrunde, eine Vorrichtung zu schaffen, welche in einer konstruktiv einfachen und bedienerfreundlichen Art und Weise möglichst variabel in Position und Höheder Ladung angepasst werden kann und dabei unabhängig und unbeeinflusst von weiteren Auf-oder Anbauteilen des Transportfahrzeuges ein Verrutschen der Ladung in Längsrichtung der Ladefläche verhindert.

Zur Lösung der gestellten Aufgabe zeichnet sich die Vorrichtung zur Sicherung von Ladung auf Transportfahrzeugen der vorstehend genannten Art durch die im Anspruch 1 angegebenen Merkmale aus. Hinsichtlich der weiteren Ausgestaltung der Erfindung wird auf die Ansprüche 2 bis 10 verwiesen.

Bei einer Vorrichtung zur Sicherung von Ladung auf einem Transportfahrzeug gemäß der Erfindung ist vorgesehen, das Ladegut an jeder beliebigen Stelle der Ladefläche, durch eine oder mehrere variable Trennwände gegen Verrutschen in Längsrichtung der Ladefläche zu sichern. Dazu sind pro Trennwand zwei Halterungsstützen und mindestens ein Querprofil oder eine Platte als Ladungssicherungselement vorgesehen. Die Halterungsstützen, die sich in Bezug zur Fahrzeuglängsrichtung in nahezu jeder Position an den Längsaußenseiten einer Ladefläche an den dort befindlichen Halterungsmitteln anbringen lassen, verfügen wiederum über ihre gesamte Höhe über Befestigungsmöglichkeiten für die Ladungssicherungselemente. Diese Befestigungsmöglichkeiten an den Halterungsstützen sind beidseitig in Fahrzeuglängsrichtung in Form von Schlüssellochstanzungen vorgesehen, wodurch die Stützen links und rechts vor und hinter der Ladung eingesetzt werden können. Das untere Ende der Halterungsstützen ist derart als Befestigungsmittel gestaltet, dass eine schnelle werkzeuglos bedienbare formschlüssige Verbindung mit den Zurrlochleisten erreicht wird. Dazu bestehen diese Befestigungsmittel aus einem abgewinkelten Stützblech und zwei angeschweißten Zurrhaken, welche im montierten Zustand der Halterungsstütze zur Ladefläche gerichtet in die Halterungsmittel an den Längsaußenseiten der Ladefläche eingehakt sind. In Verbindung mit dem Stützblech, welches sich im montierten Zustand der Halterungsstütze nach unten auf das Profil der Halterungsmittel an den Längsaußenseiten abstützt, nehmen die Zurrhaken wechselseitig die Momente auf, die durch die Belastung der Halterungsstützen in Längsrichtung der Ladefläche des Transportfahrzeugs auftreten.
Die Ladungssicherungselemente, welche vorzugsweise als Hohlprofile in Brettform ausgeführt sind, können durch entsprechende, zu den Schlüssellochstanzungen kompatible, Befestigungselemente an beiden Enden, in der Art mit den Halterungsstützen verbunden werden, dass sie einzeln verwendet wie höhenverstellbare Ladebalken eingesetzt werden können. Mehrere Hohlprofile übereinander an den Halterungsstützen angebracht, bilden eine Ladungssicherung in der Art einer Trennwand. Die vorteilhafte Gestaltung der Befestigungsmöglichkeit durch Schlüssellochstanzungen bietet zusätzlich die Möglichkeit, durch einen gesteckten Bolzen im freien bohrungsförmigen Bereich oberhalb des montierten Ladungssicherungselementes, dieses gegen ein Ausheben zu sichern.
Ein vorteilhafter Aspekt der variablen Gestaltung der erfindungsgemäßen Vorrichtung kommt insbesondere bei Ladungen zum Tragen, die wie beispielsweise Zementsäcke, unterfahreinflüssen leichtverrutschen. Durch die Positioniermöglichkeit der Vorrichtung in nahezu jeder Fahrzeuglängsposition ist es möglich, direkt vor und hinter der zu sichernden Ladung eine Vorrichtung zur Ladungssicherung in einer der Ladung in Höhe und Art angepassten Ausführung anzubringen. Durch den Einsatz mehrerer in Ausführung beliebiger Vorrichtungen gemäß Erfindung ist es denkbar, eine Ladefläche in Bereiche für den sicheren Transport unterschiedlicher Güter zu unterteilen.
Die Halterungsmittel sind an den Längsaußenseiten der Ladefläche, an denen die Halterungsstützen arretiert werden können, als Zurrlochleisten mit über ihre Länge verteilteingebrachten Zurrlöchern ausgebildet, so dass die Zurrlochleisten gleichermaßen als Halterungen für die erfindungsgemäßen Halterungsstützen und für eine Querverzurrung derLadung mit Spanngurten verwendet werden können. Des weiteren ist durch die Zurrlochleisten die Möglichkeit gegeben, die Halterungsstützen für extreme Belastungen in Fahrzeuglängsrichtung schräg nach vorne oder hinten abzuspannen. Besonders vorteilhaft für die erfindungsgemäße Vorrichtung zur Ladungssicherung auf Transportfahrzeugen ist es, dass die Vorrichtung in sich autark, unabhängig und unbeeinflusst von eventuellen weiteren Auf- oder Anbauteilen des Transportfahrzeuges eingesetzt werden kann. Bei Nichtbenutzung wird durch die Demontagemöglichkeit der Vorrichtung auf Staufachgröße keine Behinderung auf der Ladefläche und kein Ladekapazitätsverlust verursacht.

Eine detaillierte Beschreibung des Gegenstandes der Erfindung erfolgt nun anhand eines Ausführungsbeispieles. In der Zeichnung stellt im einzelnem dar:
- Fig. 1: eine perspektivische Ansicht eines Transportfahrzeuges, insbesondere eines Nutzfahrzeug Sattelaufliegers mit einer Transportsicherung gemäß der Erfindung;
- Fig. 2: eine vergrößerte Darstellung einer perspektivischen Teilansicht der erfindungsgemäßen Vorrichtung als Ausschnitt X der Fig. 1;
- Fig. 3: eine perspektivische, teilweise abgebrochen dargestellte Ansicht eines unteren Teiles einer Halterungsstütze mit Befestigungsmitteln am unteren Ende mit zwei montierten, abgebrochen dargestellten Ladungssicherungselementen in Profilform;

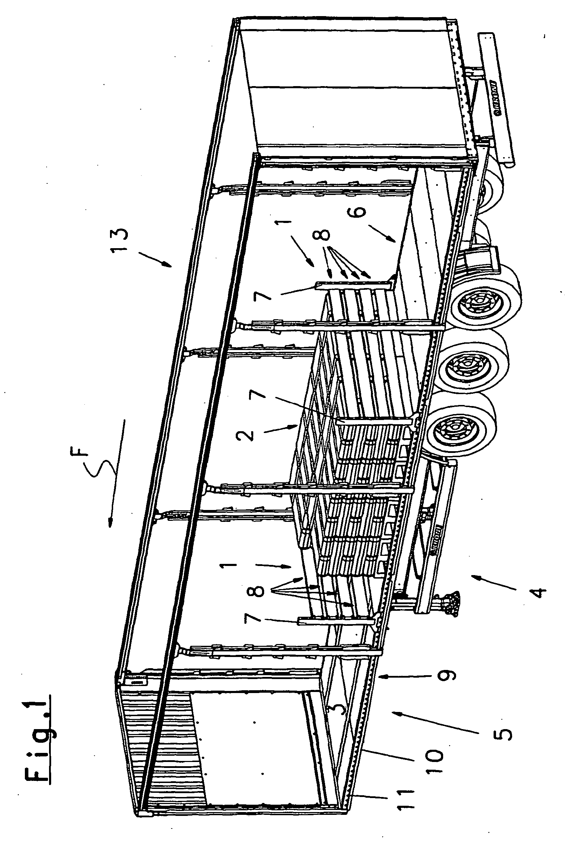

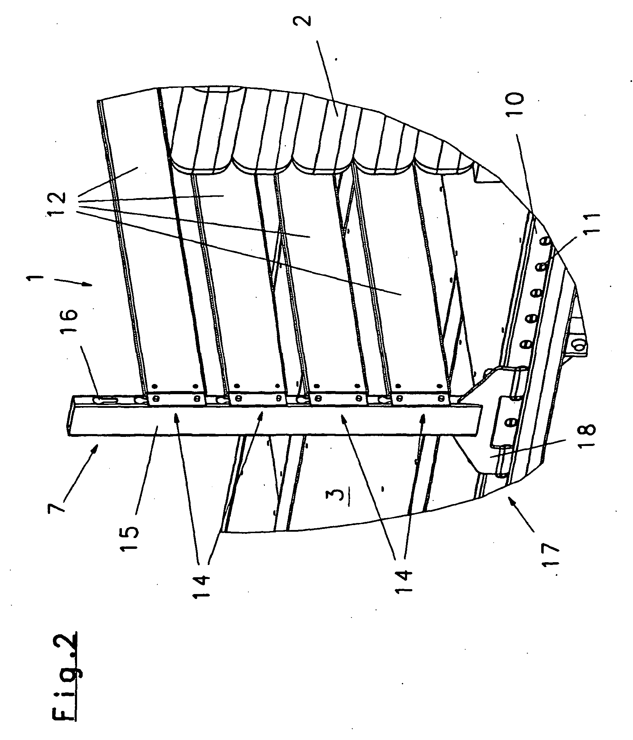

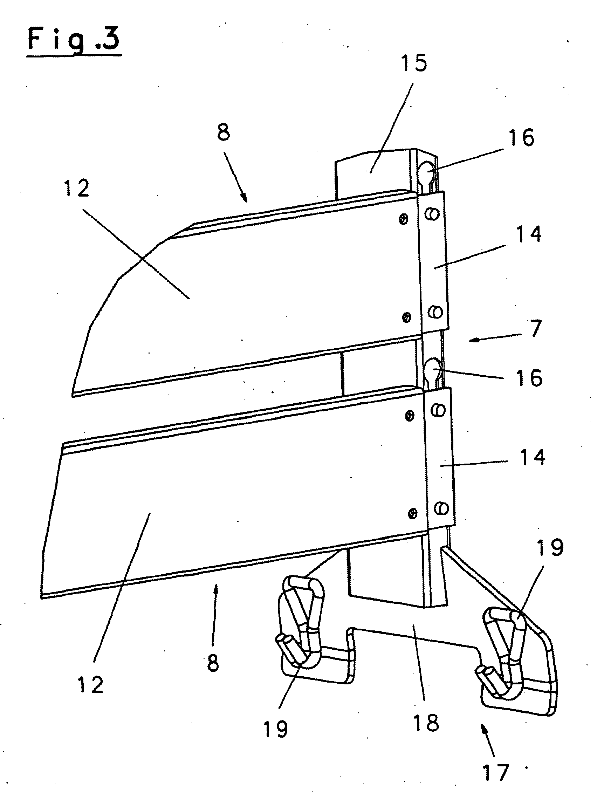

Eine von zahlreichen möglichen Ausführungsformen einer erfindungsgemäßen Vorrichtung 1 zur Sicherung von Ladung 2 auf einer Ladefläche 3 eines Transportfahrzeuges4 inLängsrichtungdesFahrzeuges ist in Fig. 1 dargestellt und besteht im wesentlichen aus senkrecht zur Ladefläche 3 an den Längsaußenseiten 5,6 der Ladefläche 3 angeordneten Halterungsstützen 7, von denen jeweils zwei gegenüberliegend angeordnet sind und durch Ladungssicherungselemente 8 vor und hinter der Ladung 2 verbunden sind, welche diese gegen Verrutschen in Fahrzeuglängsrichtung sichern. In Fig. 1 ist zu sehen, wie die an den Längsaußenseiten 5,6 der Ladefläche 3 angeordneten Halterungsmittel 9, durch ihre Ausführung als Zurrlochleisten 10 mit über ihre Länge verteilten Zurrlöchern 11, eine Arretierung der Halterungsstützen 7 unmittelbar an der Ladung 2 ermöglichen. Weiterhin ist in Fig. 1 deutlich gemacht, wie durch die variable Höhenanordnung und durch die variable Stückzahl der Ladungssicherungselemente 8, die Vorrichtung 1 zur Sicherung der Ladung 2 gegen Verrutschen in Fahrzeuglängsrichtung optimal der jeweiligen Ladung angepasst werden kann. Die in der gezeigten Ausführungsform dargestellten Ladungssicherungselemente 8 in Form von rechteckförmigen Hohlprofilen 12 bieten fürdie beispielhaft dargestellte Ladung 2 in Form von palettierten Zementsäcken, eine optimale Sicherung. Zur besseren Sichtbarkeit der Vorrichtung 1 ist in Fig. 1 eine Palette der Ladung 2 entnommen worden.
Bei der in Fig. 1 dargestellten vorteilhaften Ausführungsform der erfindungsgemäßen Vorrichtung zur Sicherung von Ladung auf Transportfahrzeugen ist deutlich erkennbar, dass die Vorrichtung 1 in sich autark ist. Es werden weder weitere Ladungsaufbauten benötigt, noch werden eventuell vorhandene Aufbauten 13, wie in Fig. 1 dargestellt, durch die Vorrichtung 1 behindert. Für eine zusätzliche Sicherung der Ladung 2 in Fahrzeugquerrichtung, sind die Zurrlochleisten 10 an den Längsaußenseiten 5,6 der Ladefläche 3 zur Anbringung von Spanngurten, Rungen oder anderen Ladungssicherungsmitteln (nicht dargestellt) frei zugänglich. Fig. 2, als vergrößerter Ausschnitt aus Fig.1, zeigt eine Seite einer Ausführungsform der montierten erfindungsgemäßen Vorrichtung 1 und deren Verbindung mit der Ladefläche 3 über die Zurrlochleisten 10 an den Längsaußenseiten 5,6 der Ladefläche 3. Vier rechteckförmige Hohlprofile 12 sind über entsprechende Befestigungselemente 14 an beiden Enden, als Ladungssicherungselemente 8 mit den Halterungsstützen 7 verbunden. Für die formschlüssige werkzeuglos bedienbare Schnellverbindung sind die Profilrohre 15 der Halterungsstützen 7 an beiden Schmalseiten mit Schlüssellochstanzungen 16 über die gesamte Länge versehen.
Durch diese beidseitig vorhandenen Schlüssellochstanzungen 16 ist eine variable Verwendung der Halterungsstützen 7 links und rechts, sowohl vor als auch hinter der Ladung möglich.
Von den Befestigungsmitteln 17 am unteren Ende der Halterungsstützen 7, bestehend aus einem abgewinkeltem Stützblech 18 und zwei Zughaken 19 (in Fig.3 dargestellt), ist in Fig. 2 die abstützende Funktion des Stützbleches 18 auf das Profil der Zurrlochleiste 10 zu erkennen. Ferner ist in Fig. 2 die Verteilung der Zurrlöcher 11 über die gesamte Länge der Zurrlochleiste 10 ausschnittweise wiedergegeben. Diese enge gleichmäßige Verteilung ermöglicht eine Positionierung der Halterungsstützen 7 an nahezu jeder Längsposition der Ladefläche 3.

Die in Fig. 3 nach oben abgebrochen gezeichnete vorteilhafte Ausführungsform einer Halterungsstütze 7 gemäß der Erfindung, ist von der im montierten Zustand der Ladefläche 3 zugewandten Seite dargestellt. In dieser Ansicht werden die an das Stützblech 18 angeschweißten Zughaken 19 der Befestigungsmittel 17 am unteren Ende der Halterungsstütze 7 deutlich. Gleichzeitig zeigt Fig. 3 nochmals zwei mit der Halterungsstütze 7 verbundene Ladungssicherungselemente 8 in abgebrochener Darstellung. Durch die hier sichtbaren freien bohrungsähnlichen Bereiche der Schlüssellochstanzungen 16 oberhalb der montierten Ladungssicherungselemente 8 ist eine Sicherung der Ladungssicherungselemente 8 durch einen durch diese Bohrung gesteckten Bolzen (nicht dargestellt) möglich.

## Patentansprüche

1. Vorrichtung zur Sicherung von Ladung auf Transportfahrzeugen, welche in der Art einer Trennwand zumindest annähernd quer zur Fahrtrichtung (F) an den Längsau-βenseiten (5, 6) einer Ladefläche (3) an dort in Fahrzeuglängsrichtung angeordneten Halterungsmitteln in unterschiedlichen Längspositionen arretierbar ist, bei der zumindest zwei, zumindest annähernd senkrecht zur Ladefläche (3) ausgerichtete Halterungsstützen (7) an den Längsaußenseiten (5, 6) der Ladefläche (3) gegenüberliegend angeordnet sind und dort in den Halterungsmitteln in Form von Zurrlochleisten (10) arretierbar sind, wobei die Zurrlochleisten (10) mit über ihre Länge verteilt eingebrachten Zurrlöchern (11) derart ausgebildet sind, dass die Zurrlochleisten (10) gleichermaßen als Halterungen für die Halterungsstützen (7) und für eine Querverzurrung der Ladung mit Spanngurten verwendbar sind, und wobei die Halterungsstützen (7) durch mindestens ein Ladungssicherungselement (8) lösbar miteinander verbunden sind, und wobei die quer zur Fahrzeuglängsrichtung mit den Halterungsstützen (7) verbundenen Ladungssicherungselemente (8) in Anzahl und Höhe variabel der jeweiligen Ladung angepasst angeordnet werden können, wobei die Befestigungsmittel (17) am unteren Ende der Halterungsstützen (7) eine werkzeuglos bedienbare formschlüssige Schnellverbindung mit den in Fahrzeuglängsrichtung an den Längsaußenseiten (5, 6) der Ladefläche (3) verlaufenden Zurrlochleisten (10) ermöglichen, indem die Befestigungsmittel (17) am unteren Ende der Halterungsstützen (7) aus einem Stützblech (18) und aus mindestens zwei Zughaken (19) bestehen, welche im montierten Zustand der Halterungsstütze (7) zur Ladefläche gerichtet in die Zurrlochleiste (10) als Halterungsmittel an den Längsaußenseiten (5, 6) der Ladefläche (3) eingehakt sind.

2. Vorrichtung zur Sicherung von Ladung nach Anspruch 1, **dadurch gekennzeichnet, dass** die Befestigungsmittel (17) am unteren Ende der Halterungsstützen (7) Belastungen der Halterungsstützen (7) in und entgegengesetzt der Fahrtrichtung gerichtet aufnehmen können.

3. Vorrichtung zur Sicherung von Ladung nach Anspruch 1 oder, **dadurch gekennzeichnet, dass** die Halterungsstützen (7) aus einem Profilrohr (15) mit einem rechteckigen Querschnitt bestehen, deren unteres Ende als Befestigungsmittel (17) ausgeführt ist.

4. Vorrichtung zur Sicherung von Ladung nach Anspruch 1 bis 3, **dadurch gekennzeichnet, dass** die Befestigungsmittel (17) am unteren Ende der Halterungsstützen (7) eine werkzeuglos bedienbare formschlüssige Schnellverbindung mit den in Fahrzeuglängsrichtung an den Längsaußenseiten (5, 6) der Ladefläche (3) verlaufenden Zurrlochleisten (10) ermöglichen.

5. Vorrichtung zur Sicherung von Ladung nach einem der Ansprüche 2 bis 4, **dadurch gekennzeichnet, dass** die Befestigungsmittel (17) am unteren Ende der Halterungsstützen aus einem abgewinkelten Stützblech (18) in Verbindung mit mindestens zwei Rastbolzen bestehen.

6. Vorrichtung zur Sicherung von Ladung nach einem der Ansprüche 1 bis 5, **dadurch gekennzeichnet, dass** die als Profilrohre (15) ausgeführten Halterungsstützen (7) zumindest einseitig an den in Fahrzeuglängsrichtung zeigenden Seiten über formschlüssige Verbindungsmöglichkeiten mit mindestens einem Ladungssicherungselement (8) verfügen.

7. Vorrichtung zur Sicherung von Ladung nach einem der Ansprüche 1 bis 6, **dadurch gekennzeichnet, dass** die als Profilrohre (15) ausgeführten Halterungsstützen (7) zumindest einseitig an den in Fahrzeuglängsrichtung zeigenden Seiten über formschlüssige Verbindungsmöglichkeiten mit mindestens einem Ladungssicherungselement verfügen und diese Verbindungsmöglichkeit in Form von Schlüssellochstanzungen (16) ausgeführt ist.

8. Vorrichtung zur Sicherung von Ladung nach Anspruch 7, **dadurch gekennzeichnet, dass** die in Fahrzeugquerrichtung weisenden Ladungssicherungselemente (8) als Hohlprofile (12) mit rechteckförmigem Querschnitt ausgeführt sind, die sich an der Profilhöhe maximal über zwei Schlüssellochstanzungen (16) an den Halterungsstützen (7) erstrecken.

9. Vorrichtung zur Sicherung von Ladung nach Anspruch 8, **dadurch gekennzeichnet, dass** die in Fahrzeugquerrichtung weisenden Ladungssicherungselemente (8) als einteilige geschlossene Platten ausgeführt sind, die sich in der Höhe über mindestens zwei Schlüssellochstanzungen (16) an den Halterungsstützen (7) erstrecken.

10. Vorrichtung zur Sicherung von Ladung nach einem der Ansprüche 1 bis 9, **dadurch gekennzeichnet, dass** die in Fahrzeugquerrichtung weisenden Ladungssicherungselemente (8) an den Enden ein Befestigungselement (14) aufweisen, die eine formschlüssige, werkzeuglos bedienbare Schnellverbindung mit den Halterungsstützen (7) ermöglichen.

## Claims

1. Device for securing loads on transporting vehicles, which device can be locked to the outer longitudinal sides (5, 6) of a load-carrying area (3), after the fashion of a partition, at least approximately transversely to the direction of travel (F) and in different longitudinal positions, on mounting means which are arranged in the longitudinal direction of the vehicle on the said outer longitudinal sides (5, 6) of the load-carrying area (3), in which device at least two mounting posts (7) aligned at least approximately perpendicularly to the load-carrying area (3) are arranged in opposite positions at the outer longitudinal sides (5, 6) of the load-carrying area (3) and can be locked in place there in the mounting means, which are in the form of tracks (10) containing holes for lashings, the tracks (10) containing holes for lashings being formed to have holes (11) for lashings so made as to be distributed along their lengths, such that the tracks (10) containing holes for lashings can equally well be used as mountings for the mounting posts (7) and for the transverse lashing of loads by tightenable straps, and the mounting posts (7) being detachably connected together by at least one load-securing member (8), and the load-securing members (8), which are connected to the mounting posts (7) transversely to the longitudinal direction of the vehicle, being able to be arranged in variable numbers and at variable heights to suit the given load, the fastening means (17) at the bottom ends of the mounting posts (7) allowing a positively engaged quick connection able to be made without tools to be made to the tracks (10) containing holes for lashings which extend along the outer longitudinal sides (5, 6) of the load-carrying area (3) in the longitudinal direction of the vehicle by virtue of the fact that the fastening means (17) at the bottom ends of the mounting posts (7) comprise a support plate (18) and at least two traction hooks (19) which, when the mounting post (7) is in the fitted state, are directed towards the load-carrying area and are hooked into the track (10) containing holes which acts as a mounting means on the outer longitudinal sides (5, 6) of the load-carrying area (3).

2. Device for securing loads according to claim 1, **characterised in that** the fastening means (17) at the bottom ends of the mounting posts (7) are able to withstand loads on the mounting posts (7) directed in the direction of travel and in the opposite direction.

3. Device for securing loads according to claim 1 or, **characterised in that** the mounting posts (7) comprise a tubular profile (15) of rectangular cross-section whose bottom end takes the form of a fastening means (17).

4. Device for securing loads according to claims 1 to 3, **characterised in that** the fastening means (17) at the bottom ends of the mounting posts (7) allow a positively engaged quick connection able to be made without tools to be made to the tracks (10) containing holes for lashings which extend along the outer longitudinal sides (5, 6) of the load-carrying area (3) in the longitudinal direction of the vehicle.

5. Device for securing loads according to one of claims 2 to 4, **characterised in that** the fastening means (17) at the bottom ends of the mounting posts comprise an angular support plate (18) in conjunction with at least two engaging pins.

6. Device for securing loads according to one of claims 1 to 5, **characterised in that** the mounting posts (7) which take the form of tubular profiles (15) have facilities for positively engaged connection to at least one load-securing member (8) on at least one side, on the sides facing in the longitudinal direction of the vehicle.

7. Device for securing loads according to one of claims 1 to 6, **characterised in that** the mounting posts (7) which take the form of tubular profiles (15) have facilities for positively engaged connection to at least one load-securing member on at least one side, on the sides facing in the longitudinal direction of the vehicle, and this connecting facility takes the forms of punched keyholes (16).

8. Device for securing loads according to claim 7, **characterised in that** the load-securing members (8) which point in the transverse direction of the vehicle are in the form of hollow profiles (12) of rectangular cross-section whose height covers not more than two punched keyholes (16) in the mounting posts (7).

9. Device for securing loads according to claim 8, **characterised in that** the load-securing members (8) which point in the transverse direction of the vehicle are in the form of one-piece solid plates whose height covers at least two punched keyholes (16) in the mounting posts (7).

10. Device for securing loads according to one of claims 1 to 9, **characterised in that** the load-securing members (8) which point in the transverse direction of the vehicle have, at the ends, fastening members (14) which allow a positively engaged quick connection able to be made without tools to be made to the mounting posts (7).

## Revendications

1. Dispositif d'immobilisation de charge sur des véhicules de transport, qui peut être calé à la manière d'une paroi de séparation, au moins à peu près transversalement à la direction de déplacement (F) sur les longs côtés extérieurs (5, 6) d'un plateau de chargement (3), dans des positons longitudinales différentes sur des moyens de retenue disposés à ces endroits dans la direction longitudinale du véhicule, dans lequel au moins deux appuis de retenue (7) orientés au moins à peu près perpendiculairement au plateau de chargement (3) sont disposés en opposition sur les longs côtés extérieurs (5, 6) du plateau de chargement (3) et peuvent y être calés dans les moyens de retenue en forme de barres perforées d'amarrage (10), les barres perforées d'amarrage (10) étant conçues avec des trous d'amarrage (11) répartis sur toute la longueur, de telle sorte que les barres perforées d'amarrage (10) puissent être utilisées de la même façon comme des éléments de retenue pour les appuis de retenue (7) et pour un arrimage transversale de la charge avec des courroies de fixation, et les appuis de retenue (7) étant reliés l'un à l'autre de façon libérable par au moins un élément d'immobilisation de charge (8), et les éléments d'immobilisation de charge (8) assemblés aux appuis de retenue (7) transversalement à la direction longitudinale du véhicule pouvant être disposés en nombre et en hauteur variables en fonction de la charge respective, les moyens de fixation (17) à l'extrémité inférieure des appuis de retenue (7) permettant un assemblage rapide en complémentarité de forme, réalisable sans outil, avec les barres perforées d'amarrage (10) s'étendant dans la direction longitudinale du véhicule sur les longs côtés extérieurs (5, 6) du plateau de chargement (3), par le fait que les moyens de fixation (17) à l'extrémité inférieure des appuis de retenue (7) se composent d'une tôle d'appui (18) et d'au moins deux crochets de traction (19), lesquels, dans l'état monté des appuis de retenue (7), orientés par rapport au plateau de chargement, sont accrochés dans la barre perforée d'amarrage (10) comme des moyens de retenue sur les longs côtés extérieurs (5, 6) du plateau de chargement (3).

2. Dispositif d'immobilisation de charge selon la revendication 1, **caractérisé en ce que** les moyens de fixation (17) à l'extrémité inférieure des appuis de retenue (7) peuvent supporter des charges des appuis de retenue (7) orientées dans la direction de déplacement et dans la direction inverse.

3. Dispositif d'immobilisation de charge selon la revendication 1, **caractérisé en ce que** les appuis de retenue (7) sont constitués par un profilé tubulaire (15) de section transversale rectangulaire, dont l'extrémité inférieure forme un moyen de fixation (17).

4. Dispositif d'immobilisation de charge selon l'une quelconque des revendications 1 à 3, **caractérisé en ce que** les moyens de fixation (17) à l'extrémité inférieure des appuis de retenue (7) permettent un assemblage rapide en complémentarité de forme, réalisable sans outil, avec les barres perforées d'amarrage (10) s'étendant dans la direction longitudinale du véhicule sur les longs côtés extérieurs (5, 6) du plateau de chargement (3).

5. Dispositif d'immobilisation de charge selon l'une quelconque des revendications 2 à 4, **caractérisé en ce que** les moyens de fixation (17) à l'extrémité inférieure des appuis de retenue sont composés d'une tôle d'appui coudée (18) en liaison avec au moins deux boulons d'encliquetage.

6. Dispositif d'immobilisation de charge selon l'une quelconque des revendications 1 à 5, **caractérisé en ce que** les appuis de retenue (7) réalisés sous forme de profilés tubulaires (15) présentent au moins dans une face, sur les côtés orientés dans la direction longitudinale du véhicule, des possibilités d'assemblage en complémentarité de forme avec au moins un élément d'immobilisation de charge (8).

7. Dispositif d'immobilisation de charge selon l'une quelconque des revendications 1 à 6, **caractérisé en ce que** les appuis de retenue (7) réalisés sous forme de profilés tubulaires (15) présentent, au moins dans une face, sur les côtés orientés dans la direction longitudinale du véhicule, des possibilités d'assemblage en complémentarité de forme avec au moins un élément d'immobilisation de charge et cette possibilité d'assemblage est réalisée sous la forme de découpes en trou de serrure (16).

8. Dispositif d'immobilisation de charge selon la revendication 7, **caractérisé en ce que** les éléments d'immobilisation de charge (8) orientés dans la direction transversale du véhicule sont constitués par des profilés creux (12) de section transversale rectangulaire, qui s'étendent, en termes de hauteur du profilé, au maximum sur deux découpes en trou de serrure (16) sur les appuis de retenue (7).

9. Dispositif d'immobilisation de charge selon la revendication 8, **caractérisé en ce que** les éléments d'immobilisation de charge (8) orientés dans la direction transversale du véhicule sont des plaques fermées d'une seule pièce, qui s'étendent en hauteur sur au moins deux découpes en trou de serrure (16) sur les appuis de retenue (7).

10. Dispositif d'immobilisation de charge selon l'une quelconque des revendications 1 à 9, **caractérisé en ce que** les éléments d'immobilisation de charge (8) orientés dans la direction transversale du véhicule présentent à leurs extrémités un moyen de fixation (14) qui permet un assemblage rapide en complémentarité de forme, réalisable sans outil, avec les appuis de retenue (7).
